# EUROPÄISCHE PATENTSCHRIFT

(11) **EP 0 808 253 B1**
(45) Veröffentlichungstag und Bekanntmachung des Hinweises auf die Patenterteilung: **17.10.2001**
(21) Anmeldenummer: 96928317.5
(22) Anmeldetag: 23.07.1996
(51) Int. Cl.: B60K 41/02, F02D 41/22

(54) **VON EINEM FEHLER IN DER MOTORSTEUERUNG ABHÄNGIGES STEUERUNGSSYSTEM**
CONTROL SYSTEM DEPENDENT ON AN ERROR IN THE ENGINE CONTROL SYSTEM
SYSTEME DE COMMANDE DEPENDANT D'UNE ERREUR DANS LA COMMANDE MOTEUR

(30) Priorität: 25.11.1995 DE 19544021
(43) Veröffentlichungstag der Anmeldung: 26.11.1997
(73) Patentinhaber: ROBERT BOSCH GMBH, 70442 Stuttgart (DE)
(72) Erfinder: SCHUBERT, Peter, D-74211 Leingarten (DE)
(86) Internationale Anmeldenummer: DE9601346
(87) Internationale Veröffentlichungsnummer: WO9719828

(56) Entgegenhaltungen:
- EP-A- 0 474 107
- FR-A- 2 632 905
- US-A- 4 515 125
- PATENT ABSTRACTS OF JAPAN vol. 013, no. 013 (M-783), 12.Januar 1989 & JP,A,63 222931 (ISUZU MOTORS LTD), 16.September 1988,

## Beschreibung

### Stand der Technik

Das erfindungsgemäße System betrifft ein Steuerungssystem mit den Merkmalen des Oberbegriffs des Anspruchs 1.

Solche automatische Kupplungen bzw. Servokupplungen sind beispielsweise bekannt aus "Kraftfahrtechnisches Taschenbuch, Auflage, 1991, Seiten 538 und 539 oder der DE-Anmeldung P 19540921. Servokupplungen bieten in Verbindung mit elektronischen Steuergeräten entweder einen automatisierten Anfahrvorgang oder, zusammen mit servobetätigten Schaltgetrieben, ein vollautomatisches Getriebe. Bei solchen Servokupplungen wird das Öffnen und Schließen der Kupplung im allgemeinen durch einen Servoantrieb getätigt.

Neben solchen Servokupplungen sind Automatikgetriebe bekannt, bei denen auf ein Ansteuersignal hin die Getriebeübersetzungen veränderbar sind. Insbesondere kann auf ein Ansteuersignal hin die Neutralstellung des Automatikgetriebes zur Unterbrechung des Kraftflußes zwischen dem Fahrzeugmotor und den Rädern eingestellt werden. Ebenso kann auch im Falle eines obenerwähnten automatisierten Handschaltgetriebes der Kraftfluß zwischen dem Fahrzeugmotor und den Rädern durch ein gesteuertes Einlegen der Neutralstellung unterbrochen werden.

Solche Automatikgetriebe können in bekannter Weise über einen hydraulischen Wandler mit dem Fahrzeugmotor verbunden sein. Der Wandler kann dabei durch eine bekannte Wandlerüberbrückungskupplung auf ein Ansteuersignal hin überbrückt werden bzw. es kann die Überbrückung aufgehoben werden.

Weiterhin ist es bekannt, zur Steuerung eines Kraftfahrzeugmotors ein Motorsteuergerät vorzusehen, mittels dem beispielsweise abhängig vom Fahrerwunsch, von Motor-Betriebsparametern und weiterer, den Betrieb des Fahrzeugs beeinflussender oder repräsentierender Größen insbesondere die Kraftstoffzufuhr gesteuert bzw. geregelt wird. Bei solchen Motorsteuerungen ist es üblich, bei bestimmten Fehlern die Motorleistung durch eine Notabschaltung in relativ kurzer Zeit, also sprunghaft, abzusenken.

So wird beispielsweise bei einer Dieselbrennkraftmaschine ein Sicherheitsabschaltventil vorgesehen, so daß im Fehlerfall eine Sicherheitsabschaltung gewährleistet ist. Ein solches Sicherheitsabschaltventil wird bei Dieselbrennkraftmaschinen als ELAB bezeichnet.

Das Dokument JP-Patent Abstracts of Japan vo. 013 (M-783), 12.Januar 1989 & JP,A,63 222931, 16.September 1988 zeigt ein Öffnen der Kupplung, wenn durch ein zu starkes Ansteigen der Fahrgeschwindigkeit im Schiebebetrieb des Motors ein Überdrehen des Motors droht. Eine Reaktion auf einem Fehler in der Motorsteuerung ist hier nicht erwähnt.

Aus der DE-Anmeldung 19535418.4 ist es bekannt, daß bei bestimmten Dieseleinspritzsystemen, insbesondere bei sogenannten Common-Rail-Systemen, die Verwendung eines solchen Sicherheitsabschaltventils problematisch ist, da ein großes Volumen an Kraftstoff, das sich unter hohem Druck befindet, zwischen dem Sicherheitsventil und den Einspritzdüsen vorhanden ist. Nach der Betätigung des Abschaltventils läuft daher der Motor noch für eine gewisse Zeit weiter, bzw. bei einem Leck tritt eine erhebliche Menge an Kraftstoff unter hohem Druck aus. In dieser Anmeldung wird ein Weg aufgezeigt, die Motorleistung im Fehlerfall noch schneller zurückzunehmen.

Der Erfindung liegt die Aufgabe zugrunde, im Falle eines erkannten Fehlers ein hohes Maß an Fahrsicherheit sicherzustellen.

### Vorteile der Erfindung

Die Erfindung geht aus von einem System zur Steuerung von Mitteln, die zwischen einem Fahrzeugmotor und den Rädern eines Fahrzeugs angeordnet ist und mittels der auf ein Ansteuersignal hin der Kraftfluß zwischen dem Fahrzeugmotor und den Rädern zumindest reduziert werden kann. Der Fahrzeugmotor wird dabei mittels einer Motorsteuerung gesteuert bzw. geregelt. Der Kern der Erfindung besteht darin, daß das erwähnte Ansteuersignal abhängig von einem erkannten Fehler in der Motorsteuerung gebildet wird.

Als Mittel im Sinne der Erfindung sind dabei insbesondere eine dem Motor nachgeordnete Kupplung, ein Automatikgetriebe oder automatisiertes Getriebe und/oder eine Wandlerüberbrückungskupplung, die einen dem Fahrzeugmotor nachgeschalteten Drehmomentwandler überbrücken kann, vorgesehen.

Die Erfindung hat den Vorteil, daß bei einem erkannten Fehler in der Motorsteuerung der Kraftschluß zwischen Motor und Rädern reduziert werden kann. Hierdurch wird erreicht, daß sich das Fahrverhalten des Fahrzeugs nicht allzu sprunghaft verändert. Insbesondere ist mit einer sicherheitskritischen Veränderung des Fahrverhaltens dann zu rechnen, wenn der erkannte Fehler mittelbar oder unmittelbar eine Änderung des Drehmoments des Fahrzeugmotors verursacht. Hierbei ist insbesondere an eine Änderung des Drehmoments im Sinne einer Verringerung gedacht. Geschieht diese Änderung auch noch in relativer kurzer Zeit, also sprunghaft, so kann es durch das dadurch verursachte Schleppmomemt des Motors zu sehr sicherheitskritischen Fahrzuständen bis hin zu einem Blockieren der Antriebsräder kommen.

Die Verringerung der Motorleistung bzw. des Motormoments kann dabei dadurch geschehen, daß in Reaktion auf den erkannten Fehler zumindest eine Minderung, i.a. aber eine vollständige Abschaltung der Kraftstoffzufuhr des Fahrzeugmotors getätigt wird.

Vorteilhafterweise wird der Kraftfluß zwischen dem Fahrzeugmotor und den Rädern bei einem solchen Fehler vollständig unterbrochen.

Es kann vorgesehen sein, daß der Fahrzeugmotor eine Dieselbrennkraftmaschine ist, bei der der Kraftstoff von einer Pumpe in ein Hochdruckteil gefördert wird und die Zumessung von Kraftstoff in die einzelnen Zylinder mittels Magnetventilen steuerbar ist. Bei einem erkannten Fehler wird dann das Drehmoment des Motors sprunghaft verringert.

Im Falle der Ausbildung der Mittel als eine dem Motor nachgeordnete Kupplung kann vorgesehen sein, daß auf das Ansteuersignal hin die Kupplung wenigstens teilweise, insbesondere aber vollständig, geöffnet wird. Im Falle der Ausbildung der Mittel als ein Automatikgetriebe oder automatisiertes Getriebe kann auf das Ansteuersignal hin das Getriebe in seine Neutralstellung gestellt werden, während im Falle der Ausbildung der Mittel als eine Wandlerüberbrückungskupplung diese Kupplung auf das Ansteuersignal hin wenigstens teilweise, insbesondere aber vollständig, geöffnet wird.

Weitere vorteilhafte Ausgestaltungen sind in Unteranspüchen zu entnehmen.

### Zeichnung

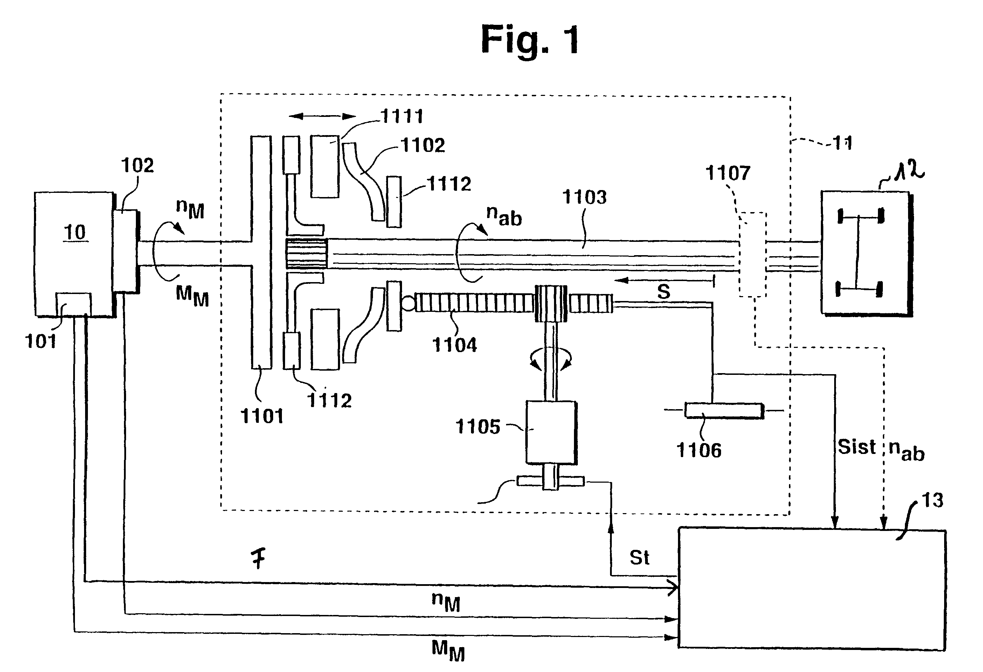

Die Figur 1 zeigt das erfindungsgemäße System anhand eines Blockschaltbildes.

### Ausführungsbeispiel

Anhand der im folgenden beschriebenen Ausführungsbeispiele soll die Erfindung am Beispiel einer Servokupplung verdeutlicht werden.

Die Figur 1 zeigt beispielhaft eine Servokupplung. Mit dem Bezugszeichen 10 ist dabei ein Fahrzeugmotor gekennzeichnet, dessen Ausgangswelle mit der Schwungscheibe 1101 der Servokupplung 11 verbunden ist. Der Betrieb des Motors 10 wird durch das Motorsteuergerät 101 gesteuert bzw. geregelt, wozu dem Motorsteuergerät 101 Betriebsdaten des Motors zugeführt werden. Abtriebsseitig führt die Servokupplung 11 über ein Getriebe zu den Rädern, die mit dem Block 12 skizziert sind. Der Kupplungssteuereinheit 13 wird die Motordrehzahl n_{M} und das Motormoment M_{M} zugeführt. Der Kupplungssteuereinheit 13 wird zusätzlich noch der aktuelle Einrückweg Sᵢₛₜ zugeleitet. Weiterhin kann dem Kupplungssteuergerät 13 zusätzlich die Abtriebsdrehzahl n_{ab}. verarbeiten. Abhängig von diesen Eingangssignalen steuert die Kupplungssteuereinheit 13 den Servomotor 1105 mittels des Signals St zur Verstellung der Kupplung an. Das Motormoment M_{M} wird dabei der Steuereinheit 13 von der Motorsteuereinheit 101 zugeführt. Das Motormoment M_{M} kann aber auch anhand von den Betriebsdaten (bspw. Last, Motordrehzahl) des Motors im Kupplungssteuergerät 13 berechnet werden. Ein Drehzahlsensor 102 liefert die Motordrehzahl n_{M}, wobei dieses Signal im allgemeinen, ebenso wie das Motormoment M_{M}, im Motorsteuergerät 101 vorliegt und von dort der Steuereinheit 13 zugeführt werden kann. Darüber hinaus mißt der Sensor 1107 die Abtriebsdrehzahl n_{ab} der Servokupplung.

Für den Gegenstand der vorliegenden Erfindung ist die Funktion der Servokupplung nur insoweit wesentlich, daß durch sie der Kraftschluß zwischen Motor 10 und Rädern 12 reduziert bzw. unterbrochen werden kann.

Die Kupplung an sich ist in bekannter Weise mit einer Schwungscheibe 1101, einer Druckplatte 1111, einem Federelement (Tellerfeder) 1102 und dem Ausrücklager 1112 ausgestattet. Das Drehmoment, das von der Kupplung im schleifenden Betrieb übertragen wird, das Kupplungsmoment M_{K}, ist unter anderem durch die Vorspannung der Tellerfeder 1102 gegeben. Die Vorspannung der Tellerfeder 1102 ist wiederum abhängig vom Einrückweg S des Kupplungsgestänges, das in diesem Ausführungsbeispiel als Zahnstange 1104 ausgebildet ist. Die Zahnstange 1104 wird durch die Ausgangswelle des Stellmotors 1105 betätigt. Im Normalbetrieb der Kupplung wird der Weg S, also der Einrückweg, über einen Regelkreis abhängig von einem Sollwert Sₛₒₗₗ eingeregelt. Damit läßt sich über den Sollwert Sₛₒₗₗ das Kupplungsmoment steuern.

Wesentlich für die vorliegende Erfindung ist es, daß das Motorsteuergerät 101 an das Kupplungssteuergerät 13 unter anderem das Signal F sendet, wenn ein Fehler im Motorsteuergerät erkannt ist, der zu einer Notabschaltung (bspw. Abschalten der Kraftstoffzufuhr) des Motors führt. In Reaktion auf das Fehlersignal F wird im Kupplungssteuergerät 13 eine derartige Ansteuerung St der Kupplung veranlaßt, die zu einem Öffnen der Kupplung und damit zu einer Unterbrechung des Kraftflußes zwischen Motor 10 und Räder 12 führt.

An dieser Stelle soll nochmals ausdrücklich darauf hingewiesen werden, daß es sich bei der obenbeschriebenen Ausführungsform um eine beispielhafte Darstellung der Erfindung anhand einer Servokupplung handelt. Die Servokupplung dient dabei lediglich als eine Möglichkeit der Ausgestaltung der anspruchsgemäßen Mittel, mittels der auf ein Ansteuersignal F (bzw. St) hin der Kraftfluß zwischen dem Fahrzeugmotor und den Rädern zumindest reduziert werden kann. Ohne den erfindungsgemäßen Gedanken zu verlassen, kann vorgesehen sein, daß statt der Servokupplung 11 ein an sich bekanntes Automatikgetriebe (mit diskret oder kontinuierlich verstellbaren Getriebeübersetzungen), ein automatisiertes Handschaltgetriebe und/oder eine Wandlerüberbrückungskupplung, die einen dem Fahrzeugmotor nachgeschalteten Drehmomentwandler überbrücken kann, zur Anwendung kommt. Dabei ist dann vorgesehen, daß im Falle der Ausbildung der Mittel als ein Automatikgetriebe oder automatisiertes Getriebe auf das Ansteuersignal F hin das Getriebe in seine Neutralstellung gestellt wird. Im Falle der Ausbildung der Mittel als eine Wandlerüberbrückungskupplung wird auf das Ansteuersignal F hin diese Kupplung wenigstens teilweise, insbesondere aber vollständig, geöffnet. Dabei können weiterhin auch Kombinationen der obengenannten Möglichkeiten Verwendung finden, indem beispielsweise ein Automatikgetriebe in seine Neutralstellung und (vorher, nachher oder gleichzeitig) die Wandlerüberbrückungskupplung geöffnet wird.

## Patentansprüche

1. System zur Steuerung von zwischen einem Fahrzeugmotor (10) und den Rädern (12) eines Fahrzeugs angeordneten Mitteln (11), mittels der auf ein Ansteuersignal (F) hin der Kraftfluß zwischen dem Fahrzeugmotor (10) und den Rädern (12) zumindest reduziert wird, wobei der Fahrzeugmotor (10) mittels einer Motorsteuerung (101) gesteuert bzw. geregelt wird, **dadurch gekennzeichnet, daß** das Ansteuersignal (F) abhängig von einem erkannten Fehler in der Motorsteuerung (101) gebildet wird.

2. System nach Anspruch 1, **dadurch gekennzeichnet, daß** die Mittel als
- eine dem Motor nachgeordnete Kupplung (11),
- ein Automatikgetriebe oder automatisiertes Getriebe und/oder
- eine Wandlerüberbrückungskupplung, die einen dem Fahrzeugmotor nachgeschalteten Drehmomentwandler überbrücken kann,
ausgebildet sind.

3. System nach Anspruch 1, **dadurch gekennzeichnet, daß** der erkannte Fehler mittelbar oder unmittelbar eine Änderung des Drehmomentes (M_{M}) des Fahrzeugmotors (10) verursacht.

4. System nach Anspruch 3, **dadurch gekennzeichnet, daß** der erkannte Fehler mittelbar oder unmittelbar eine Verringerung des Drehmoments (M_{M}) des Fahrzeugmotors (10) verursacht.

5. System nach Anspruch 4, **dadurch gekennzeichnet, daß** der erkannte Fehler mittelbar oder unmittelbar eine sprunghafte Verringerung des Drehmoments (M_{M}) des Fahrzeugmotors (10) verursacht.

6. System nach Anspruch 1, **dadurch gekennzeichnet, daß** der erkannte Fehler zumindest eine Minderung der Kraftstoffzufuhr des Fahrzeugmotors (10) verursacht.

7. System nach Anspruch 6, **dadurch gekennzeichnet, daß** der erkannte Fehler eine Abschaltung der Kraftstoffzufuhr des Fahrzeugmotors (10) verursacht.

8. System nach Anspruch 1, **dadurch gekennzeichnet, daß** auf das Ansteuersignal (F) hin der Kraftfluß zwischen dem Fahrzeugmotor (10) und den Rädern (12) unterbrochen wird.

9. System nach Anspruch 1, **dadurch gekennzeichnet, daß** der Fahrzeugmotor eine Dieselbrennkraftmaschine (10) ist, bei der der Kraftstoff von einer Pumpe in ein Hochdruckteil gefördert wird und die Zumessung von Kraftstoff in die einzelnen Zylinder mittels Magnetventilen steuerbar ist und bei einem erkannten Fehler das Drehmoment (M_{M}) des Motors (10) sprunghaft verringert wird.

10. System nach Anspruch 2, **dadurch gekennzeichnet, daß**
- im Falle der Ausbildung der Mittel als eine dem Motor nachgeordnete Kupplung (11) auf das Ansteuersignal (F) hin die Kupplung wenigstens teilweise, insbesondere vollständig, geöffnet wird,
- im Falle der Ausbildung der Mittel als ein Automatikgetriebe oder automatisiertes Getriebe auf das Ansteuersignal (F) hin das Getriebe in seine Neutralstellung gestellt wird, oder
- im Falle der Ausbildung der Mittel als eine Wandlerüberbrückungskupplung diese Kupplung auf das Ansteuersignal (F) hin wenigstens teilweise, insbesondere vollständig, geöffnet wird.

## Claims

1. System for controlling means (11), which are arranged between a vehicle engine (10) and the wheels (12) of a vehicle and by which the flow of power between the vehicle engine (10) and the wheels (12) is at least reduced in response to a control signal (F), the vehicle engine (10) being controlled or regulated by means of an engine control system (101), **characterized in that** the control signal (F) is formed as a function of a detected fault in the engine control system (101).

2. System according to Claim 1, **characterized in that** the means are designed as
- a clutch (11) arranged on the output side of the engine,
- an automatic gearbox or automated gearbox and/or
- a converter lock-up clutch that can lock up a torque converter arranged on the output side of the vehicle engine.

3. System according to Claim 1, **characterized in that** the detected fault directly or indirectly causes a change in the torque (M_{M}) of the vehicle engine (10).

4. System according to Claim 3, **characterized in that** the detected fault directly or indirectly causes a reduction in the torque (M_{M}) of the vehicle engine (10).

5. System according to Claim 4, **characterized in that** the detected fault directly or indirectly causes an abrupt reduction in the torque (M_{M}) of the vehicle engine (10).

6. System according to Claim 1, **characterized in that** the detected fault causes at least a reduction in the fuel supply to the vehicle engine (10).

7. System according to Claim 6, **characterized in that** the detected fault causes the fuel supply to the vehicle engine (10) to be shut off.

8. System according to Claim 1, **characterized in that** the flow of power between the vehicle engine (10) and the wheels (12) is interrupted in response to the control signal (F).

9. System according to Claim 1, **characterized in that** the vehicle engine is a diesel internal combustion engine (10), in which the fuel is pumped into a highpressure part by a pump and the metering of fuel into the individual cylinders can be controlled by means of solenoid valves and, when a fault is detected, the torque (M_{M}) of the engine (10) is reduced abruptly.

10. System according to Claim 2, **characterized in that**
- where the means are designed as a clutch (11) arranged on the output side of the engine, the clutch is at least partially, in particular completely, opened in response to the control signal (F),
- where the means are designed as an automatic gearbox or automated gearbox, the gearbox is set to its neutral position in response to the control signal (F), or
- where the means are designed as a converter lock-up clutch, this clutch is at least partially, in particular completely, opened in response to the control signal (F).

## Revendications

1. Système de commande de moyens (11) interposés entre un moteur de véhicule (10) et ses roues (12), qui au moins réduit la transmission du couple entre le moteur (10) et les roues (12) en fonction d'un signal de commande (F), le moteur (10) étant commandé ou régulé par une commande de moteur (101) ,
**caractérisé en ce qu'**
on forme le signal de commande (F) en fonction d'une erreur détectée dans la commande de moteur (101).

2. Système selon la revendication 1,
**caractérisé en ce que**
les moyens sont :
- un embrayage (11) en aval du moteur,
- une boîte de vitesses automatique ou une boîte de vitesses automatisée et/ou
- un embrayage de coupure de convertisseur permettant de court-circuiter un convertisseur de couple en aval du moteur.

3. Système selon la revendication 1,
**caractérisé en ce que**
l'erreur détectée produit directement ou indirectement une modification du couple (M_{M}) fourni par le moteur (10).

4. Système selon la revendication 3,
**caractérisé en ce que**
l'erreur détectée produit directement ou indirectement une réduction du couple (M_{M}) fourni par le moteur (10).

5. Système selon la revendication 4,
**caractérisé en ce que**
l'erreur détectée produit directement ou indirectement une réduction brutale du couple (M_{M}) fourni par le moteur (10).

6. Système selon la revendication 1,
**caractérisé en ce que**
l'erreur détectée produit au moins une réduction de l'alimentation en carburant du moteur (10).

7. Système selon la revendication 6,
**caractérisé en ce que**
l'erreur détectée produit une coupure de l'alimentation en carburant du moteur (10) du véhicule.

8. Système selon la revendication 1,
**caractérisé en ce que**
sur un signal de commande (F) on coupe la transmission du couple entre le moteur (10) et les roues (12).

9. Système selon la revendication 1,
**caractérisé en ce que**
le moteur du véhicule est un moteur Diesel (10) recevant le carburant par une pompe à partir d'une partie haute pression et le dosage du carburant dans chaque cylindre se commande à l'aide d'injecteurs électromagnétiques et en cas d'erreur détectée, le couple (M_{M}) fourni par le moteur (10) est diminué brutalement.

10. Système selon la revendication 2,
**caractérisé en ce que**
- en cas de réalisation des moyens sous la forme d'un embrayage (11) en aval du moteur, sur le signal (F) on ouvre l'embrayage au moins partiellement et notamment totalement,
- si le moyen est réalisé par une boîte de vitesses automatique ou une boîte de vitesses automatisée, sur le signal de commande (F) on fait passer la boîte de vitesses dans sa position neutre ou,
- dans le cas du moyen réalisé sous la forme d'un embrayage de coupure, sur le signal (F) on ouvre au moins partiellement, notamment totalement, cet embrayage.
